# EUROPÄISCHE PATENTSCHRIFT

(11) **EP 0 740 963 B1**
(45) Veröffentlichungstag und Bekanntmachung des Hinweises auf die Patenterteilung: **13.12.2000**
(21) Anmeldenummer: 96890076.1
(22) Anmeldetag: 24.04.1996
(51) Int. Cl.: B03C 3/017, B03C 3/02, B03C 3/53, B03C 3/88, B03C 3/16, B03C 3/78

(54) **Anlage zur Reinigung von staubhaltigem Abgas**
Apparatus for purifying dust-laden exhaust gas
Installation pour la purification des gaz d'échappement chargés de poussières

(30) Priorität: 02.05.1995 AT 74995
(43) Veröffentlichungstag der Anmeldung: 06.11.1996
(73) Patentinhaber: Scheuch GmbH, 4971 Aurolzmünster (AT)
(72) Erfinder: Lisberger, Manfred, Dipl.-Ing., 4752 Riedau (AT)
(74) Vertreter: Köhler-Pavlik, Johann, Dipl.-Ing.

(56) Entgegenhaltungen:
- EP-A- 0 292 149
- AT-B- 351 646
- DE-A- 3 329 637
- DE-A- 3 914 673
- DE-A- 4 212 344
- FR-A- 2 680 474

## Beschreibung

Die Erfindung betrifft eine Anlage zur Reinigung von staubhaltigem Abgas, insbesondere von Abgas und/oder Abluft aus Trocknungsanlage, speziell für Holz- bzw. Holzspäne nach dem Oberbegriff des Anspruchs 1.

Staubhaltige Abgase bzw. Abluft treten in vielen Bereichen der Industrie, z.B. in Trocknungsanlagen der Holzindustrie auf. Hier werden Staub, Harzaerosole und Wasserdampf, aber auch in Abhängigkeit vom jeweiligen Trocknungsgut wasserdampfflüchtige, gasförmige organische Substanzen, allenfalls auch anorganische Rachgasbestandteile und Flugasche, ausgetragen.

Zur Abscheidung der genannten Verunreinigungen sind trocken arbeitende Abluftreinigungsanlagen wie Zyklone, Gewebe- oder Schichtbettfilter und Trockenelektrofilter bzw. Elektro-Schichtbettfilter bekannt. Die Abscheideleistung von Zyklonen ist nur für massereiche Partikel ausreichend, für Feinststäube und organische Verunreinigungen sind sie nicht geeignet. Schichtbettfilter ohne Aufladung der Filterbetts zeigen ebenfalls zu geringe Abscheideleistungen. Elektro-Schichtbettfilter können zwar staubförmige Emissionen gut vermindern, sind aber aufgrund des notwendigen Umlaufes und der Reinigung der Partikel des Filterbettes sehr umfangreich und aufwendig. Überdies können mit diesen Filtern organische Emissionen kaum vermindert werden. Trocken-Elektrofilter stellen durch Funkenüberschläge aufgrund organischer Ablagerungen eine große Brandgefahr dar. Gewebefilter zeigen zwar gute Abscheideleistungen bei staubförmigen Emissionen, können aber bei klebrigen Verunreinigungen im Abgas, wie sie z.B. in Form klebriger Harzaerosole in der Holzindustrie auftreten, rasch unbrauchbar werden.

Die DE 42 12 344 A1 beschreibt eine Rohgasfilteranlage zur Abscheidung und Filterung, bei der die Rohgase mit möglichst geringem Energieaufwand und kleiner Reparaturanfälligkeit, also kleinen Ausfallzeiten, auf möglichst großen Reinheitsgrad gefiltert werden können. Dabei sind mehrere Filterstufen übereinander angeordnet und werden vom Abgas von unten nach oben durchströmt. Die Stufen zur Naßreinigung und zur elektrostatischen Reinigung sind voneinander getrennt und seitlich angeordnet, sodaß ein größerer Platzbedarf resultiert.

Naß arbeitende Systeme, wie etwa Naß-Elektrofilter können neben Feststoffen auch organische Stoffe und Geruchsstoffe, mit besonders guter Wirkung auf polare Stoffe, abscheiden. Die EP-A-0 358 006 beschreibt ein Verfahren und eine Anlage zur Reinigung von aus Trocknungsanlagen stammendem Abgas. Zur Erhöhung der Abscheiderate des Staubes und der Schadstoffe der Abgase besteht die Anlage aus einem beispielsweise als Zyklon oder Elektrofilter ausgeführten Trockenabscheider, einer nachgeschalteten Wasch- und Kondensationsvorrichtung für das Abgas mit einem als Grobabscheider ausgebildeten Sumpf und einem Naß-Tiefbettfilter sowie einer Flotationsvorrichtung. Schließlich wird das Gas einem weiteren Elektrofilter zugeführt und nochmals gereinigt. Da die Anlage während der Abreinigung abgeschaltet werden muß, können während dieser Zeit große Mengen Rohgas ungereinigt entweichen und nach dem Wiedereinschalten große Mengen der im Filter abgereinigten Substanzen mit der wieder einsetzenden Gasströmung in die Atmosphäre freigesetzt werden.

Aus der US-A-5 137 546 und der US-A-5 160 510 ist ein Verfahren und ein Gerät zur elektrostatischen Reinigung von staub- und schadstoffenthaltenden Abgasen bekannt, wobei die Abgase in einer ersten Stufe einer elektrostatischen Reinigung unter trockenen Bedingungen und anschließend in einer zweiten Stufe einer Naßreinigung unterworfen werden. In der ersten Stufe erfolgt eine Befreiung der Abgase von trockenem Staub, während in der zweiten Naßreinigungsstufe durch den Zusatz bestimmter Flüssigkeiten auch andere Komponenten abgeschieden werden können. Die Reinigung der Elektroden wird durch periodisches Klopfen während des Betriebs erreicht und die naßarbeitenden Elektroden werden zur Reinigung von einer Flüssigkeit überspült. Durch die seitliche Anordnung der Filterstufen ist allerdings ein hoher Platzbedarf für die Abscheideanlage erforderlich.

Die Aufgabe der vorliegenden Erfindung besteht in der Entwicklung einer Anlage zur Reinigung von Abgasen der eingangs beschriebenen Art für kontinuierlichen Betrieb und möglichst großer Abscheideleistung unter Vermeidung der Gefahr von Funkenüberschlägen aufgrund organischer Ablagerungen sowie der weiteren oben erwähnten Nachteile.

Diese Aufgabe wird erfindungsgemäß durch die im kennzeichnenden Teil des Anspruchs 1 angegebenen Merkmale gelöst. Durch die mehrstufige Anordnung können hohe Abscheideleistungen erzielt werden. Die Brandgefahr durch organische Ablagerungen wird durch Abreinigung des Elektrofilters mittels der Einspritzvorrichtungen auf ein Mindestmaß gesenkt. Die Abreinigung ist für jede Filterstufe unabhängig. Die Abreinigung kann periodisch oder auf den jeweiligen Verschmutzungsgrad abgestimmt erfolgen. Während der Abreinigung jeweils einer Filterstufe kann aufgrund der mehrstufigen Anordnung die bzw. jede andere Filterstufe voll im Rohgasstrom in Betrieb bleiben, sodaß auch während der kurzen Abreinigungszeiten ein durchgehender Betrieb der Anlage gewährleistet ist und dabei lediglich kurzfristig Reingas-Staubwerte von maximal 25 mg/m³ auftreten können. Durch die Abscheidewirkung der jeweils in Betrieb bleibenden Filterstufe(n) können überschießende Emissionen nach Abreinigung einer Filterstufe weitestgehend verhindert werden. Darüberhinaus ist durch die vertikale Anordnung der Filterstufen eine geringere Grundfläche der Anlage notwendig und können verschiedene bauliche Zwischenstufen, wie z.B. ein separater Kamin entfallen. Die Wassertrennböden zwischen den Filterstufen erlauben das Passieren der Abgase und fangen die von oben kommende Flüssigkeit auf. Diese erfindungsgemäßen Einrichtungen sind für eine unabhängige Funktion der übereinander angeordneten Filterstufen notwendig. Die erfindungsgemäße Anlage gestattet eine einfache und rasche Um- bzw. Aufrüstung auch zur Abscheidung von speziell kurzkettigen organischen Verunreinigungen durch Einbau zusätzlicher Abscheideeinrichtungen, wie z.B. Füllkörperwäschern, in der auf den Wassertrennboden folgenden Filterstufe, wobei der unabhdngige Betrieb der vorhergehenden Filterstufe(n) und deren unabhängige Reinigung nicht beeinflußt wird.

Gemäß einem weiteren Merkmal der Erfindung ist eine Kreislaufführung des Wassers, vorzugsweise über eine Reinigungsanlage, vorgesehen. Damit kann der Wasserbedarf der Anlage drastisch reduziert werden. Die vorteilhafte Ausführungsform gewährleistet immer eine gleich effiziente Abreinigung des Elektrofilters.

Um die Abreinigungswirkung weiter zu verstärken bzw. ein Anbacken oder Ankleben von organischen Substanzen oder Stäuben auf Teilen des Elektrofilters zu verhindern, ist zumindest eine der Filterstufen als luftgekühltes Röhrenfilter mit vorzugsweise runden Röhren ausgeführt. Aufgrund der konstruktiv einfach ausführbaren Luftkühlung bildet sich an den Teilen des Elektrofilters Kondenswasser, welches schon während des Normalbetriebs der Anlage einen großen Teil der Stäube und der organischen Substanzen wegspült. Auch können sich die genannten Verunreinigungen an den feuchten Bauteilen nicht richtig festsetzen, sodaß die Abreinigung durch die Wassereinspritzung wesentlich bessere Wirkung entfalten kann.

Gemäß einem weiteren Erfindungsmerkmal sind Einrichtungen zum Abziehen des erwärmten Kühlluftstromes nach Durchströmen des Röhrenfilters und Leitungen zum Zuführen dieses erwärmten Kühlluftstromes in den Abgasstrom hinter der letzten Filterstufe in die Abgasleitung einmündend vorgesehen, wodurch einerseits der so erwärmte Reingasstrom nach Verlassen der Anlage keine optisch auffällige Dunstwolke bildet und sich überdies allfällige noch im Reingas befindliche Restemissionen nicht am Anlagenausgang oder in der Umgebung niederschlagen. Bei herkömmlichen Anlagen notwendige Abscheideanlagen können daher bei der erfindungsgemäßen Anlage mit dem obigen Merkmal entfallen.

Vorteilhafterweise ist das Wasser vom Wassertrennboden in einen von dem oder jedem anderen Wasserkreislauf separaten Wasserkreislauf geführt, sodaß das mit den organischen Verunreinigungen beladene Wasser in geeigneter Weise gereinigt und die organischen Substanzen entsorgt werden können.

Für den sicheren Betrieb der Anlage ist eine isolierte Aufhängung der Elektroden des oder jedes Elektrofilters im Inneren der Anlage von großer Bedeutung. Andernfalls kann es zu Spannungsverlust, Kurzschlüssen, Funkenüberschlägen usw. kommen. Klebrige Substanzen, wie z.B. Harzaerosolen können feuchte, klebrige und leitende Schichten auf den Elekrodenaufhängungen bilden. Bislang wurden teure, aufwendige und beschädigungsanfällige Keramikisolatoren verwendet. Gemäß einem weiteren Merkmal der Erfindung sind die isolierten Aufhängungen für die Elektroden der Filterstufen außerhalb des eigentlichen Abgasstromes in nach unten offenen Gehäusen angeordnet und mündet zumindest eine Spülluftleitung in das Gehäuse ein. Damit wird ein dem Einströmen von verschmutztem Rohgas entgegengerichteter Spülluftstrom erzeugt und es kann die Verschmutzung der Elektrodenaufhängung deutlich verringert und deren Aufbau vereinfacht bzw. die Standzeit oder die Zeit zwischen notwendigen Reinigungen der Aufhängung verlängert werden.

Dieser Effekt kann noch weiter verbessert werden, wenn zumindest eine Spülluftleitung im oberen Bereich des Gehäuses einmündet und am unteren, offenen Ende des Gehäuses ein die Aufhängung der Elektrode ringförmig umgebendes Endstück einer Spülluftleitung mit zumindest einer schräg nach unten und innen gerichteten Auslaßöffnung vorgesehen ist. Dadurch wird bereits der Eingang in das Gehäuse der Aufhängung durch einen Luftvorhang aus Spülluft vom eigentlichen Rohgasraum getrennt und dem Eindringen von Verschmutzungen entgegengewirkt.

Bei Einsatz zumindest eines, vorzugsweise beider oben erwähnten Merkmale kann durch die Aufhängung der Elektrode über eine Aufhängestange bzw. ein Aufhängerohr, welche(s) von einer Kunststoffauflagehülse getragen ist, eine billige, einfache und äußerst robuste Ausführung realisiert werden.

Eine einfache Ausführung zur wirtschaftlichen Förderung und vorzugsweise auch zur Erzielung der Erwärmung der Spülluft für die Aufhängungsgehäuse kann dadurch erzielt werden, daß Einrichtungen zur Abtrennung eines Teiles der Kühlluft der Elektrofilter, vorzugsweise in Strömungsrichtung hinter dem Elektrofilter, vorgesehen sind und zumindest eine der Spülluftleitungen mit diesen Einrichtungen in Verdindung steht. Damit kann ein großer Bereich der Luftleitungen zusammengelegt oder können Leitungsabschnitte gemeinsam genutzt werden. Nach Durchströmen der Filterstufe ist die Luft darüberhinaus bereits ohne zusätzlichen Energieeinsatz erwärmt, wodurch Kondensation im Gehäuse der Aufhängung vermieden wird und Kurzschlüsse verhindert werden.

Um allfällige Zusatzstoffe wie Flockungsmittel, Stoffe zur Einstellung eines bestimmten pH-Wertes, etc. direkt und mit geringsten Verlusten zu deren Wirkungsstellen in der Anlage zu bringen, sind gemäß einem weiteren Erfindungsmerkmal Einrichtungen zur Zugabe bzw. Zudosierung von Zusatzstoffen in das Wasser des oder jedes Wasserkreislaufes vorgesehen. Dadurch kann die verlustreiche Zugabe in das Rohgas vor der ersten Filterstufe entfallen, bei der ein großer Teil der zugesetzten Stoffe durch die Filterung nicht an die vorgesehenen Einsatzstellen gelangen und die Abscheideleistung für die eigentlichen Verunreinigungen im Rohgas blockiert würde. Beispielsweise kann Holzschleifstaub als die Transportfähigkeit von Teer oder ähnlichen klebrigen Substanzen erhöhendes Zusatzmittel direkt in das Spülwasser zugegeben und dadurch ohne Verluste unmittelbar an seine Bestimmungsstelle transportiert werden. Auch hauptsächlich zur Einstellung des pH-Wertes verwendetes Ca(OH)₂. Flockungsmittel od. dgl. werden direkt ins Wasser zugegeben, wodurch die Wirkung besser dosierbar ist und geringere Mengen notwendig sind.

In besonders einfacher Weise erfolgt die Einbringung trockener Zusatzstoffe in das Wasser nach Mischen mit Wasser in schlammförmigem Zustand, wofür vorteilhafterweise die Einrichtungen ein Rührwerk mit Wasseranschluß umfassen und zumindest eine Verbindungsleitung vom Rührwerk zu einer Stelle im Wasserkreislauf in Strömungsrichtung vor dem ersten Elektrofilter und nach einer allfälligen Wasserreinigungsanlage vorgesehen ist.

Um die Betriebssicherheit der Anlage durch Reinhalten des für die Rohgasströmung verantwortlichen Bauteils weiter zu erhöhen, ist gemäß einem weiteren Erfindungsmerkmal ein in einer Zuleitung für das Rohgas befindlicher Ventilator mit einer auf dessen Laufrad gerichteten Wassereinspritzdüse versehen.

Gemäß einem weiteren Erfindungsmerkmal ist zumindest ein Teilbereich eines unterhalb der ersten Filterstufe angeordneten, die obere Begrenzung einer Vergleichmäßigungskammer für die Rohgasströmung darstellenden Gasverteilbleches mit Tellerventilen zum wahlweisen Verschließen oder Öffnen versehen.

Vorzugsweise ist die gesamte Fläche des Gasverteilbleches mit in separat betätigbare Untereinheiten unterteilte Anordnungen von Tellerventilen versehen.

In der nachfolgenden Beschreibung wird ein bevorzugtes Ausführungsbeispiel der erfindungsgemäßen Einrichtung unter Bezugnahme auf die beigefügten Zeichnungen näher erläutert.

Es zeigen
- Fig. 1: ein Schema der Gesamtanlage einschließlich aller Nebenanlagen und -aggregate,
- Fig. 2: einen Längsschnitt durch die erfindungsgemäße Filteranlage,
- Fig. 3: einen gegenüber Fig. 2 um 90° versetzten Längsschnitt durch die Filteranlage,
- Fig. 4: den Querschnitt die Filteranlage längs einer horizontalen Linie in Höhe eines Elektrofilters,
- Fig. 5: eine Draufsicht auf das Gasverteilerblech vor den Filterabschnitten und ein Detail längs der Schnittlinie A-A und
- Fig. 6: einen Längsschnitt durch das Gehäuse der Aufhängung einer Elektrode.

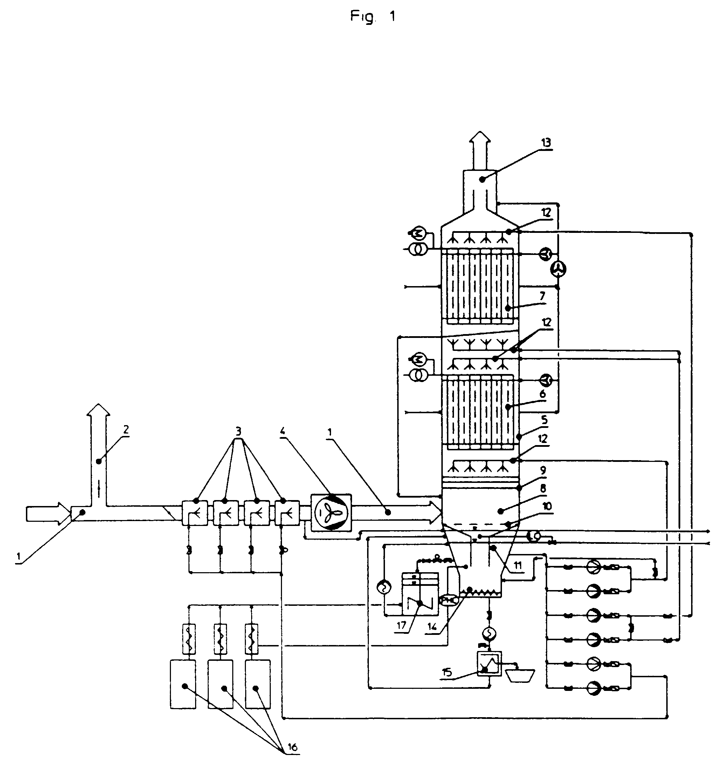

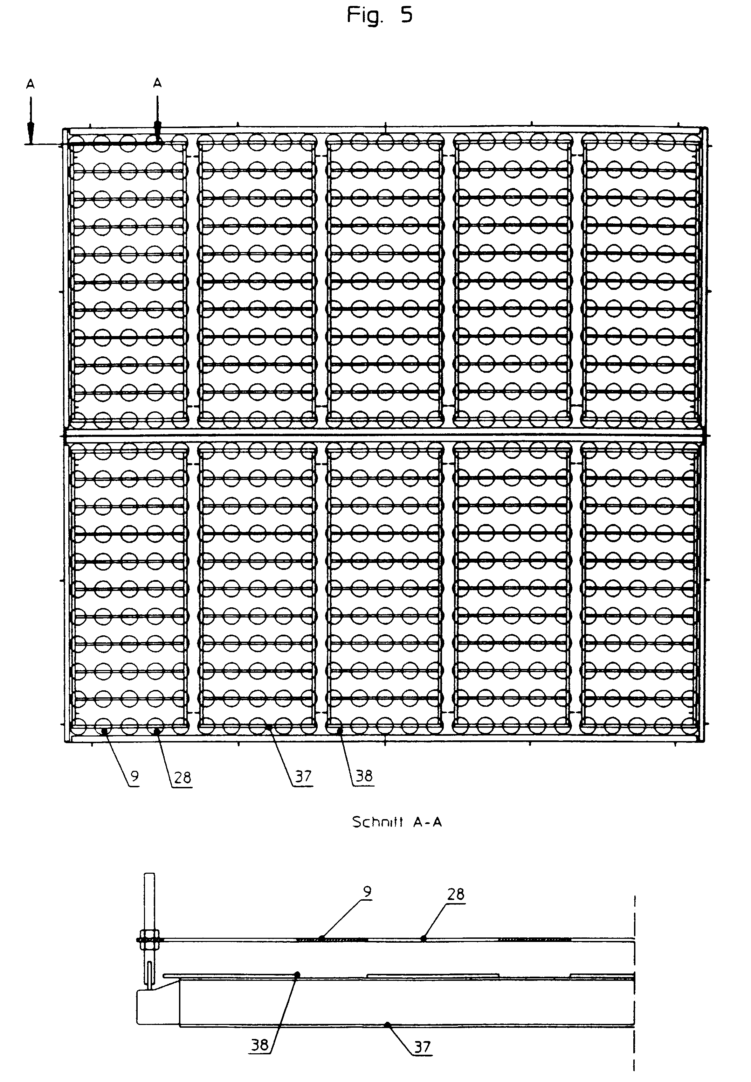

Wie in Fig. 1 gezeigt, wird das staubbeladene Abgas über eine Zuleitung 1 mit einem Notkamin 2 allenfalls nach Passieren zumindest einer Quench-Stufe 3 mit Hilfe eines Ventilators 4 in die Abscheideanlage 5 gefördert. Zur Erhöhung der Betriebssicherheit aufgrund dauernder Reinigung ist im Ventilator 4 eine auf dessen Laufrad gerichtete Wasserdüse zur periodischen oder kontinuierlichen Wassereinspritzung vorgesehen, durch deren eingebrachtes Wasser allfällige niedergeschlagene Verschmutzungen am Laufrad und im Inneren des Ventilators 4 abgewaschen werden können. Die Abscheideanlage 5 hat die Form eines senkrechten Turmes, in welchem übereinander zwei Elektrofilter 6, 7 angeordnet sind. Unterhalb des unteren Elektrofilters 6 befindet sich eine Vergleichmäßigungskammer 8 für die Rohgasströmung, deren obere Begrenzung durch ein Gasverteilerblech 9, vorteilhafterweise mit einstellbaren Mittelabständen (siehe Fig. 5) gebildet ist. Die untere Begrenzung der Vergleichmäßigungskammer 8 wird durch den Flüssigkeitsspiegel 10 des Wassers im Sammel- und Abscheidebecken 11 gebildet. Zur Abreinigung der Bauteile im Inneren der Abscheideanlage 5, speziell zur Abreinigung der Elektrofilter 6, 7 sind Leitungen 12 mit vorzugsweise auf die Elektrofilter 6, 7 bzw. das Gasverteilerblech 9 gerichteten Einspritzdüsen vorgesehen. Die untersten, auf das Gasverteilerblech 9 gerichteten Leitungen 12 werden vorzugsweise kontinuierlich betrieben und bilden eine erste Waschstufe. Ober dem zweiten, oberen Elektrofilter 7 wird der Reingasstrom über eine den Kamin 13 bildende Öffnung ins Freie geleitet. Die bei der Abreinigung der Elektrofilter 6, 7 und des Gasverteilerbleches 9 in das Waschwasser gelangenden Substanzen setzen sich am Boden des Sammel- und Abscheidebeckens 11 ab und können z.B. mit Hilfe einer Schnecke 14 oder einer Schlammpumpe abgeführt und in einer geeigneten Einrichtung 15, beispielsweise einem Dekanter, entwässert und als Schlamm entsorgt werden. Das Wasser wird wieder dem Becken 11 rückgeführt. Allfällige Zusatzstoffe wie etwa Ca(OH)₂ für die Einstellung des gewünschten pH-Wertes, Flockungsmittel oder Holzschleifstaub als Transporterleichterung für Teer und dgl. werden in trockener Form in Vorratsbehältern 16 gelagert und vor Einbringung in das Wasser des Wasserkreislaufes der Abscheideanlage 5 in einem Rührbehälter 17 mit Wasser zu einem Schlamm vermischt und in dieser Form dem Wasser im Becken 11 zugeführt. Auch Chemikalien für die chemische Bindung von Substanzen im Rohgas, speziell zur Abscheidung von organischen Substanzen in einem Naßverfahren, können in dieser Weise in das einzusprühende Wasser eingebracht werden.

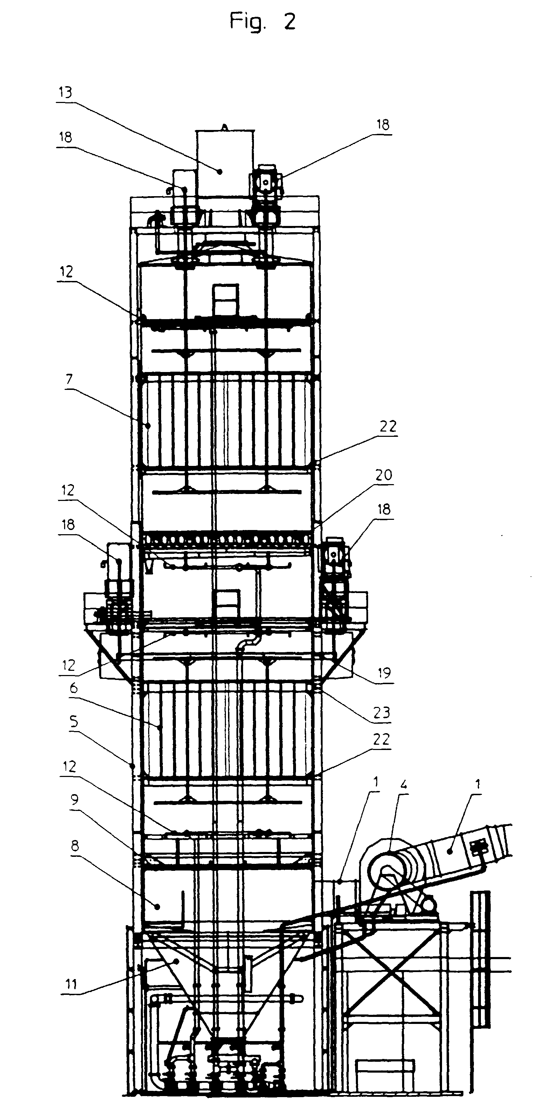

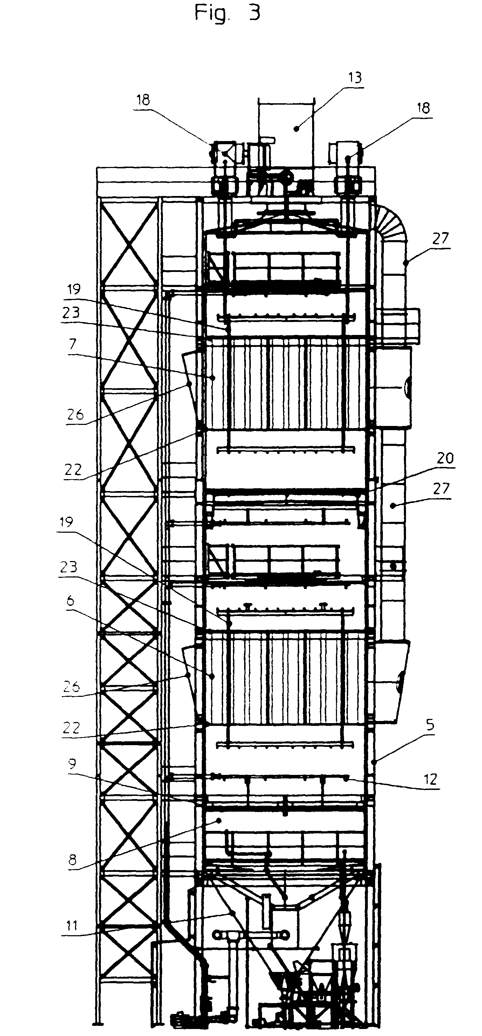

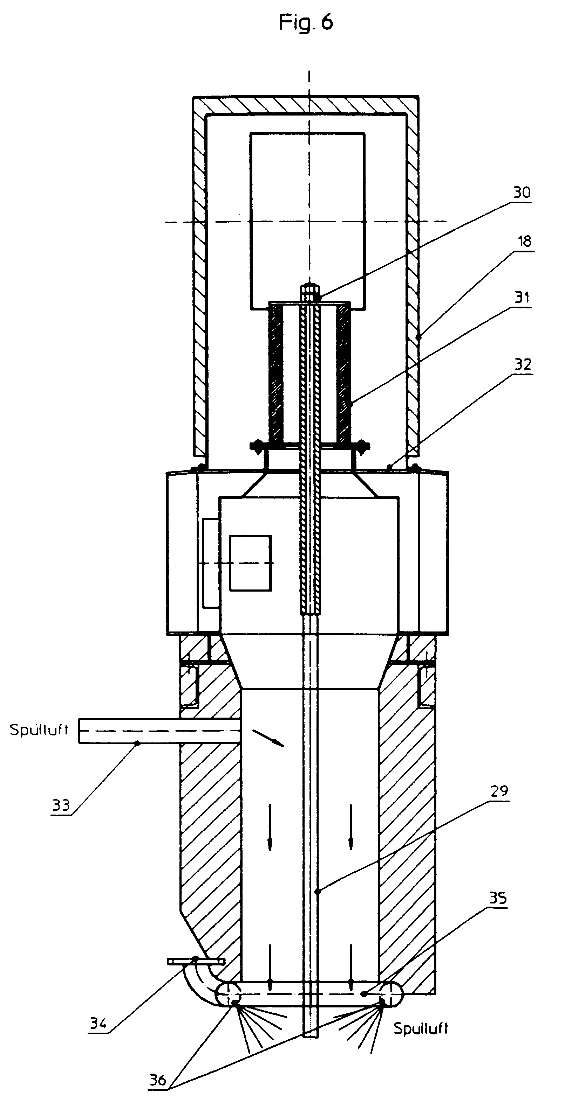

In Fig. 2 und Fig. 3 sind zwei verschiedene Längsschnitte der Abscheideanlage 5 wiedergegeben. In der Abscheideanlage 5 sind deutlich die Gehäuse 18 für die Aufhängungen der die Elektroden tragenden Elektrodenrahmen 19 der beiden Filterstufen 6, 7 zu erkennen, welche in Fig. 6 im Detail dargestellt sind. Der Wassertrennboden 20 zwischen den Filterstufen 6, 7 verhindert, daß von der Abreinigung des oberen Elektrofilters 7 herrührendes Wasser auf das darunterliegende Elektrofilter 6 tropft. Dadurch ist eine bauliche Trennung und somit eine unabhängige Funktion der beiden Filterstufen 6, 7 gewährleistet. Die Wasserkreisläufe zur Reinigung des unteren Elektrofilters 6 und des oberen Elektrofilters 7 können getrennt werden. Somit ist es auch möglich, daß eines der Filter 6, 7, vorteilhafterweise das obere, zweite Filter 7 und dessen Wasserkreislauf zur Abscheidung speziell kurzkettiger organischer Substanzen wie etwa Formaldehyd ausgelegt wird, während gleichzeitig das untere, erste Filter 6 mit einem separatem Wasserkreislauf zur Abscheidung hauptsächlich staubförmiger Verunreinigungen und langkettigen organischen Moleküle betrieben wird. Dazu kann allenfalls zusätzlich oberhalb des Wassertrennbodens 20 zwischen den Filterstufen 6, 7 ein herkömmlicher Füllkörperwäscher vorgesehen werden, der in die erfindungsgemäße Anlage ohne aufwendige Umbauarbeiten eingebaut werden kann. Der Wassertrennboden 20 gestattet das Passieren von gasförmigen Fluids, fängt aber von oben kommende Flüssigkeiten auf, die durch eine übereinander und versetzt gegeneinander angeordnete Anzahl von Rinnen bzw. Trichtern mit Abläufen in die jeweils darunterliegende Rinne geleitet und schließlich aus der untersten Ebene abgezogen und im dargestellten Beispiel dem Sammel- und Absetzbecken 11 zugeführt werden, in das auch das Wasser der Abreinigung des unteren Filters 6 direkt hineintropft. Das vom Wassertrennboden 20 abgezogene Wasser könnte aber auch in einen separaten Kreislauf, d. h. über eine vom Becken 11 getrennte Reinigungsanlage und von dort wieder zurück zur Abreinigung des oberen Filters 7 bzw. zur Eindüsung für eine Naßreinigung des Abgases über die Leitungen 12 geführt werden.

Durch Wassereindüsung über die Leitungen 12 können die Filter 6, 7, insbesondere die Niederschlagsflächen für die abgeschiedenen Partikel bzw. Substanzen, periodisch abgereinigt werden. Als geeigneter Kompromiß zwischen möglichst kontinuierlichem Betrieb der Anlage und Verhinderung betriebsstörender bzw. leistungsvermindernder Verschmutzung sind Intervalle zwischen der Abreinigung der ersten, stärker verschmutzten Filterstufe 6 von ca. drei Stunden und Intervalle zwischen der Abreinigung der zweiten, geringer verschmutztes Rohgas erhaltenden Filterstufe 7 von ca. zwölf Stunden üblich.

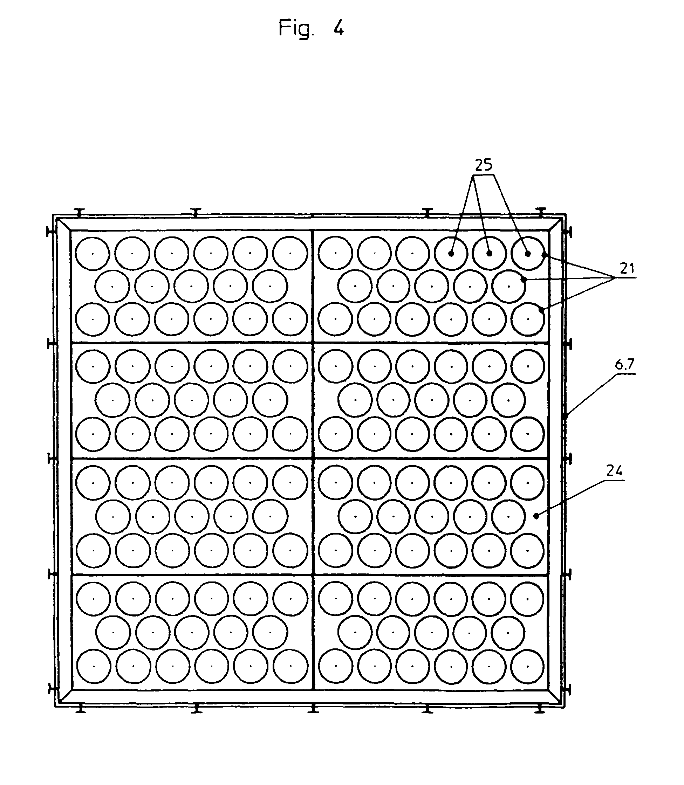

Fig. 4 zeigt eine vorteilhafte Ausführungsform der Elektrofilter 6, 7 als Röhrenfilter. Dabei ist zwischen den einzelnen Niederschlagsflächen ein gegenüber dem Rohgasbereich der Abscheideanlage 5 mittels eines oberen Bleches 22 und eines unteren Bleches 23 abgegrenzter Raum 24 in Form von vorzugsweise kreisrunden Röhren 21, welche vom Rohgas durchströmt werden, vorhanden. Durch die einzelnen Röhren 21 verlaufen, vorzugsweise koaxial die in den Elektrodenrahmen 19 gespannten Ionisationsdrähte 25. Durch Eintrittsöffnungen 26 wird Außenluft an und zwischen den Röhren 21 durch den Raum 24 hindurchgesaugt, wodurch die Wände der Röhren 21 gekühlt werden. Dies führt zur Kondensation des im Rohgas enthaltenen Wasserdampfes, wodurch ein Anhaften von Verschmutzungen an den Röhren 21 erschwert wird bzw. die Verunreinigungen in einer Art Selbstreinigung des Filters zumindest teilweise abgewaschen werden. Die erwärmte Luft wird nach Durchströmen der Räume 24 mit Hilfe zumindest eines Ventilators über eine Leitung 27 abgezogen und vorzugsweise hinter dem oberen Elektrofilter 7 in den Kamin 13 eingeleitet und somit dem aus der Anlage 5 austretenden Reingas zur Temperaturerhöhung zugemischt.

Eine besonders gute Abstimmung der beiden Filterstufen aufeinander wurde mit einer Spannung für die erste Filterstufe 6 von ca. 80 kV und für die zweite Stufe 7 von ca. 70 kV sowie einer Stromstärke von etwa 310 mA für die erste Stufe 6 und ca. 410 mA für das zweite Elektrofilter 7 erzielt, wobei diese Werte natürlich, unter Beibehaltung der niedrigeren Spannung und höheren Stromstärke in der zweiten Filterstufe 7, je nach den geometrischen Bedingungen in den jeweiligen Elektrofiltern abgeändert werden können.

In Fig. 5 ist das Gasverteilerblech 9 mit seinen vorzugsweise kreisrunden Durchtrittsöffnungen 28 für das Rohgas dargestellt. Diese Einrichtung dient dazu, die meist in einem Winkel zur die weitere Strömungsrichtung definierenden Längsachse der Anlage 5, meist sogar im rechten Winkel, eingeleitete Gasströmung derart zu vergleichmäßigen, daß die Strömungsgeschwindigkeit über den gesamten Querschnitt der Anlage 5 im wesentlichen gleich ist. Diese Beeinflußung der Gasströmung kann noch weiter verbessert werden, wenn verschiedene Bereiche der Fläche des Gasverteilbleches 9 gezielt abgesperrt bzw. für die Durchströmung freigegeben werden können. Vorteilhafterweise sind dazu in verschiedenen Flächenbereichen des Gasverteilbleches 9 separate und getrennt voneinander betätigbare Ventilanordnungen vorgesehen. Diese sind vorzugsweise als Tellerventil-Anordnungen ausgeführt, welche aus im wesentlichen flachen Tellerplatten 38 bestehen, welche die Öffnungen im Gasverteilblech 9 überdecken können und die auf Trägerrahmen 37 montiert sind. Dazu können die Trägerrahmen 37 selbst beweglich oder die Tellerplatten 38 an den Rahmen 37 beweglich betätigbar montiert sein.

In Fig. 6 ist die Aufhängung der Elektrodenrahmen 19 vergrößert dargestellt. Der Elektrodenrahmen 19 hängt an einer geraden Stange oder einem Rohr 29 ohne weitere geometrische Ausgestaltung, wie dies etwa bei herkömmlichen Keramikisolatoren der Fall ist. Das obere Ende der Stange 29 ist über eine Auskragung oder über eine mit dem oberen Ende der Stange 29 verbundene Scheibe 30 auf einer normalen Kunststoffbuchse 31 abgestützt, welche ihrerseits auf einem im wesentlichen horizontalen Wandungsabschnitt 32 der Wand der Anlage 5 aufliegt. Die Ablagerung von klebrigem, feuchtem und leitendem Niederschlag auf der Stange oder dem Rohr 29 wird durch Erzeugung einer nach unten und aus dem Gehäuse 18 hinaus gerichteten Spülluft-Strömung verhindert, welche das Eindringen verschmutzten Rohgases weitestgehend abwendet. Zu diesem Zweck ist im oberen Bereich des Gehäuses 18 zumindest eine Einmündung für eine erste Spülluftleitung 33 vorgesehen, die eine entlang der Stange 29 nach unten gerichtete Strömung reiner Spülluft bewirkt. Diese Spülluft wird vorteilhafterweise von der Kühlluft der Elektrofilter 6, 7 nach deren Durchströmung und damit Erwärmung abgezweigt. Dadurch ist die Spülluft vorteilhafterweise bereits erwärmt und es kommt im Gehäuse 18 nicht zur Kondensation und zum Anlagern allfälliger doch eingedrungener Schmutzpartikel. Alternativ oder vorzugsweise zusätzlich dazu ist eine zweite Spülluftleitung 34 zum unteren Ende des Gehäuses 18 hin vorgesehen, welche in ein die Stange oder das Rohr 29 ringfömig umgebendes Endstück 35 ausläuft. Dieses Endstück 35 ist mit entlang seines Umfanges verteilten Öffnungen, Düsen, Schlitzen od. dgl. 36 versehen, allenfalls auch mit einem ganz umlaufenden Schlitz, welche(r) schräg nach innen auf die Stange 29 und nach unten hin gerichtet sind (ist). Dadurch wird eine Art Luftvorhang und eine zusätzliche Strömung entgegen der Einströmrichtung ins Gehäuse 18 und entgegengesetzt der Rohgasströmung hervorgerufen.

## Patentansprüche

1. Anlage zur Reinigung von staubhaltigem Abgas, insbesondere von Abgas und/oder Abluft aus Trocknungsanlagen, speziell für Holz- bzw. Holzspäne, umfassend zumindest eine Elektrofilteranlage, die jeweils aus zumindest zwei baulich getrennten, übereinander angeordneten Filterstufen (6, 7) besteht, welche vom Abgas von unten nach oben durchströmt werden, und die weiters mit Einspritzvorrichtungen für Wasser zur Abreinigung der Filter (6, 7) versehen ist, dadurch gekennzeichnet, daß die Abreinigung für jede Filterstufe (6, 7) unabhängig ist, und daß zwischen den Filterstufen (6, 7) jeweils ein Wassertrennboden (20) vorgesehen ist, sodaß verhindert wird, daß vom oberen Filter (6) herrührendes Wasser auf das darunter liegende Filter (7) tropft, und daß weiters Einrichtungen zum Abziehen des Wassers von jedem Wassertrennboden (20) vorgesehen sind.

2. Anlage nach Anspruch 1, dadurch gekennzeichnet, daß eine Kreislaufführung des Wassers, vorzugsweise über eine Reinigungsanlage, vorgesehen ist.

3. Anlage nach Anspruch 1 oder 2, dadurch gekennzeichnet, daß zumindest eine der Filterstufen (6, 7) als luftgekühltes Röhrenfilter mit vorzugsweise runden Röhren (21) ausgeführt ist.

4. Anlage nach Anspruch 3, dadurch gekennzeichnet, daß Einrichtungen zum Abziehen des erwärmten Kühlluftstromes nach Durchströmen des Röhrenfilters (6, 7) und Leitungen (27) zum Zuführen dieses erwärmten Kühlluftstromes in den Abgasstrom hinter der letzten Filterstufe (7) in die Abgasleitung (13) einmündend vorgesehen sind.

5. Anlage nach einem der Ansprüche 2 bis 4, dadurch gekennzeichnet, daß eine Kreislaufführung des Wassers vom Wassertrennboden (20) in einen von dem oder jedem anderen Wasserkreislauf separaten Wasserkreislauf vorgesehen ist.

6. Anlage nach einem der vorhergehenden Ansprüche, dadurch gekennzeichnet, daß die isolierten Aufhängungen (29) für die Elektroden (19) der Filterstufen (6,7) außerhalb des eigentlichen Abgasstromes in nach unten offenen Gehäusen (18) angeordnet sind und zumindest eine Spülluftleitung (33, 34) in das Gehäuse (18) einmündet.

7. Anlage nach Anspruch 6, dadurch gekennzeichnet, daß zumindest eine Spülluftleitung (33) im oberen Bereich des Gehäuses (18) einmündet und am unteren, offenen Ende des Gehäuses (18) ein die Aufhängung (29) der Elektrode (19) ringförmig umgebendes Endstück (35) einer Spülluftleitung (34) mit zumindest einer schräg nach unten und innen gerichteten Auslaßöffnung (36) vorgesehen ist.

8. Anlage nach Anspruch 6 oder 7, dadurch gekennzeichnet, daß die Aufhängung der Elektrode (19) über eine Aufhängestange bzw. ein Aufhängerohr (29) erfolgt, welche(s) von einer Kunststoffauflagehülse (31) getragen ist.

9. Anlage nach einem der Ansprüche 6 bis 8, dadurch gekennzeichnet, daß Einrichtungen zur Abtrennung eines Teiles der Kühlluft der Elektrofilter (6, 7), vorzugsweise in Strömungsrichtung hinter dem Elektrofilter, vorgesehen sind und daß zumindest eine der Spülluftleitungen (33, 34) mit diesen Einrichtungen in Verbindung steht.

10. Anlage nach einem der vorhergehenden Ansprüche, dadurch gekennzeichnet, daß Einrichtungen (16, 17) zur Zugabe bzw. Zudosierung von Zusatzstoffen in das Wasser des oder jedes Wasserkreislaufes vorgesehen sind.

11. Anlage nach Anspruch 10, dadurch gekennzeichnet, daß die Einrichtungen ein Rührwerk (17) mit Wasseranschluß und zumindest eine Verbindungsleitung vom Rührwerk zu einer Stelle im Wasserkreislauf in Strömungsrichtung vor dem ersten Elektrofilter (6) und nach einer allfälligen Wasserreinigungsanlage vorgesehen ist.

12. Anlage nach einem der vorhergehenden Ansprüche, dadurch gekennzeichnet, daß ein in einer Zuleitung (1) für das Rohgas befindlicher Ventilator (4) mit einer auf dessen Laufrad gerichteten Wassereinspritzdüse versehen ist.

13. Anlage nach einem der vorhergehenden Ansprüche, dadurch gekennzeichnet, daß zumindest ein Teilbereich eines unterhalb der ersten Filterstufe (6) angeordneten, die obere Begrenzung einer Vergleichmäßigungskammer (8) für die Rohgasströmung darstellenden Gasverteilbleches (9) mit Tellerventilen (37, 38) zum wahlweisen Verschließen oder Öffnen, vorzugsweise die gesamte Fläche des Gasverteilbleches (9) mit in separat betätigbare Untereinheiten unterteilte Anordnungen von Tellerventilen (37, 38) versehen, ist.

## Claims

1. A plant for purifying dust-containing waste gas, in particular waste gas and/or outgoing air from drying plants, especially for wood or wood chips, respectively, comprising at least one electric filtering device comprised of at least two structurally separated, superposed filtering stages (6, 7) passed through by the waste gas from bottom to top and which moreover are provided with injection devices for water for dedusting the filters (6, 7), characterized in that dedusting of each filtering stage (6, 7) is effected independently, and that between the filtering stages (6, 7) a water-separating floor (20) is each provided thus preventing water arriving from the upper filter (6) from dripping on the filter (7) arranged therebelow, and that furthermore means are provided for draining the water from each water-separating floor (20).

2. A plant according to claim 1, characterized in that a means for circulating water, preferably via a purifying device, is provided.

3. A plant according to claim 1 or 2, characterized in that at least one of the filtering stages (6, 7) is configured as an air-cooled tubular filter comprising preferably round tubes (21).

4. A plant according to claim 3, characterized in that devices for withdrawing the heated cooling air flow after its passage through the tubular filter (6, 7) and ducts (27) for supplying this heated cooling air flow into the waste gas flow are provided, entering into the waste gas duct (13) downstream of the last filtering stage (7).

5. A plant according to any one of claims 2 to 4, characterized in that a means for circulating water from the water-separating floor (20) into a water circulation separate from the or each other water circulation is provided.

6. A plant according to any one of the preceding claims, characterized in that the insulated suspension devices (29) for the electrodes (19) of the filtering stages (6, 7) are arranged outside the waste gas flow proper in downwardly open housings (18) and at least one flushing air duct (33, 34) enters into the housing (18).

7. A plant according to claim 6, characterized in that at least one flushing air duct (33) enters in the upper region of the housing (18) and on the lower, open end of the housing (18) an end piece (35) of a flushing air duct (34) comprising at least one slantedly downwardly and inwardly directed outlet aperture (36) and annularly surrounding the suspension device (29) of the electrode (19) is provided.

8. A plant according to claim 6 or 7, characterized in that the electrode (19) is suspended via a suspension rod assembly or a suspension rod (29), respectively, carried by a plastic-coated sleeve (31).

9. A plant according to any one of claims 6 to 8, characterized in that means for separating part of the cooling air of the electric filters (6, 7) are provided, preferably in flow direction downstream of the electric filter, and that at least one of the flushing air ducts (33, 34) is connected with these devices.

10. A plant according to any one of the preceding claims, characterized in that means (16, 17) for admixing or dosing additives into the water of the or each water circulation are provided.

11. A plant according to claim 10, characterized in that the means comprise a stirrer (17) with a water connection and at least one connecting duct from the stirrer to a site in the water circulation upstream of the first electric filter (6) in flow direction and following an optional water purifying device.

12. A plant according to any one of the preceding claims, characterized in that a fan (4) located in a supply duct (1) for the crude gas is provided with a water injection nozzle directed to the impeller of the fan.

13. A plant according to any one of the preceding claims, characterized in that at least a partial range of a gas distributing plate (9) arranged below the first filtering stage (6) and constituting the upper limit of an equalization chamber (8) for the crude gas flow is provided with disk valves (37, 38) for selective closing or opening, preferably the entire area of the gas distributing plate (9) is provided with arrangements of disk valves (37, 38) subdivided into sub-units capable of being separately actuated.

## Revendications

1. Installation d'épuration de gaz d'épuration contenant de la poussière, en particulier des gaz d'échappement et/ou de l'air extrait provenant d'installations de séchage, de manière spécifique pour le bois ou des copeaux de bois, comprenant au moins une installation de filtration électronique qui est dans chaque cas composée d'au moins deux étages de filtres (6, 7) séparés et disposés l'un au-dessus de l'autre quant à leur construction, qui sont traversés par les gaz d'échappement de bas en haut et sont en outre dotés de dispositifs de projection d'eau en vue de nettoyer le filtre (6, 7), caractérisée en ce que le nettoyage est indépendant pour chaque étage de filtres (6, 7) et en ce qu'il est respectivement prévu, entre les étages de filtre (6, 7), un plancher de drainage d'eau (20), pour éviter que l'eau provenant du filtre supérieur (6) tombe goutte-à-goutte sur le filtre inférieur (7) et en ce que d'autres dispositifs sont prévus pour retirer l'eau de chaque plancher de drainage d'eau (20).

2. Installation selon la revendication 1, caractérisée en ce qu'il est prévu un écoulement d'eau sous forme de circuit, de préférence en passant par une installation d'épuration.

3. Installation selon la revendication 1 ou 2, caractérisée en ce qu'au moins un des étages de filtres (6, 7) est réalisé sous forme de filtre tubulaire refroidi par air avec de préférence des tubes ronds (21).

4. Installation selon la revendication 3, caractérisée en ce que son prévus des dispositifs destinés à éliminer le flux d'air froid réchauffé une fois qu'il a parcouru le filtre tubulaire (6, 7) et les conduites (27) destinées à acheminer ce flux d'air froid réchauffé dans le flux de gaz d'échappement derrière le dernier étage de filtres (7) en débouchant dans la conduite de gaz d'échappement (13).

5. Installation selon l'une des revendications 2 à 4, caractérisée en ce qu'un écoulement de l'eau sous forme de circuit depuis le plancher de drainage d'eau (20) est prévu dans un autre circuit d'eau séparé du ou de chaque autre circuit d'eau.

6. Installation selon l'une des revendications précédentes, caractérisée en ce que les suspensions isolées (29) destinées aux électrodes (19) des étages de filtres (6, 7) situées en dehors du flux de gaz d'échappement proprement dit sont disposées dans des boîtiers (18) ouverts vers le bas et au moins une conduite d'air de balayage (33, 34) débouche dans le boîtier (18).

7. Installation selon la revendication 6, caractérisée en ce qu'une conduite d'air de balayage (33) débouche dans la zone supérieure du boîtier (18) et en ce qu'il est prévu, au niveau de l'extrémité inférieure ouverte du boîtier (18) une pièce d'extrémité (35) d'une conduite d'air de balayage (34) entourant selon une forme annulaire la suspension (29) de l'électrode (19), avec au moins une ouverture d'évacuation (36) dirigée de manière oblique vers le bas et l'intérieur.

8. Installation selon la revendication 6 ou 7, caractérisée en ce que la suspension de l'électrode (19) est réalisée sur une barre de suspension ou un tube de suspension (29) qui est supporté(e) par un manchon de support (31) en matière plastique.

9. Installation selon l'une des revendications 6 à 8, caractérisée en ce que sont prévus des dispositifs destinés à séparer une partie de l'air froid des électro-filtres (6, 7), de préférence dans la direction d'écoulement derrière l'électro-filtre et en ce qu'au moins une des conduites d'air de balayage (33, 34) est reliée à ces dispositifs.

10. Installation selon l'une des revendications précédentes, caractérisée en ce que des dispositifs (16, 17) destinés à ajouter ou ajouter de manière dosée des substances supplémentaires dans l'eau du ou de chaque circuit d'eau.

11. Installation selon la revendication 10, caractérisée en ce qu'au niveau des dispositifs, il est éventuellement prévu un mélangeur (17) avec une alimentation en eau et au moins une conduite de raccordement allant du mélangeur jusqu'à un endroit dans le circuit d'eau avant le premier électro-filtre (6) dans la direction d'écoulement et après une installation d'épuration d'eau.

12. Installation selon une des revendications précédentes, caractérisée en ce qu'un ventilateur (4) se trouvant dans une conduite (1) destinée au gaz brut est doté d'une buse de projection d'eau dirigée sur sa roue à aubes.

13. Installation selon une des revendications précédentes, caractérisée en ce qu'au moins une zone partielle d'une tôle de répartition de gaz (9) située en dessous du premier étage de filtres (6), représentant la délimitation supérieure d'une chambre d'homogénéisation (8) destinée à la circulation de gaz brut est dotée de soupapes à volet (37, 38) pour fermer ou ouvrir au choix de préférence la surface totale de la tôle de répartition de gaz (9) avec des agencements de soupapes à volet (37, 38), subdivisés en sous-unités pouvant être actionnées séparément.
